# EUROPÄISCHE PATENTANMELDUNG

(11) **EP 2 916 057 A1**
(43) Veröffentlichungstag der Anmeldung: **09.09.2015**
(21) Anmeldenummer: 14000795.6
(22) Anmeldetag: 05.03.2014
(51) Int. Cl.: F16K 31/50, F16K 1/48

(54) **Ventil**

(71) Anmelder: R. Nussbaum AG, 4601 Olten (CH)
(72) Erfinder: Billeter, Lukas, 4800 Zofingen (DE); Strub, Marcel, 4614 Hägendorf (DE); Bobst, Urs, 4703 Kestenholz (DE); Zeiter, Patrik, 4853 Riken (DE)
(74) Vertreter: Rüfenacht, Philipp Michael

(57) **Zusammenfassung**

Ein Oberteil für ein fluidführendes Ventil, respektive ein Ventil umfasst eine Führungsstange (120) und einen Ventilteller (110,1), welche durch einen Fügvorgang verbunden sind. Entsprechend wird in einem Verfahren zum Herstellen eines Oberteils für ein Ventil mit einer Führungsstange (120) und einem Ventilteller (110.1), der Ventilteller (110.1) und die Führungsstange (120) durch einen Fügvorgang verbunden.

## Beschreibung

### Technisches Gebiet

Die Erfindung betrifft einen Oberteil für ein fluidführendes Ventil, insbesondere für die Wasserversorgung, umfassend eine Führungsstange und einen Ventilteller. Weiter betrifft die Erfindung ein Ventil umfassend ein Oberteil, sowie ein Verfahren zur Herstellung eines Oberteils.

### Stand der Technik

Ein Ventil umfasst in der Regel einen Schliesskörper in der Form eines Ventiltellers, welcher entlang einer Spindelachse einer Spindel in einen Ventilsitz verschoben werden kann. Bei geschlossenem Ventil drückt die Spindel den Ventilteller in den Ventilsitz.

Ventile dieser Art sind bekannt und werden in grossen Mengen, zum Beispiel für die Trinkwasserversorgung und dergleichen hergestellt. An solche Ventile werden entsprechend hohe Anforderungen gestellt. Die mechanische Qualität soll hoch sein, das heisst, es wird eine hohe Lebensdauer, sowie ein robuster Betrieb des Ventils erwartet. Beim Einsatz in der Trinkwasserversorgung soll zudem den gängigen Hygienevorschriften entsprochen werden. Demgegenüber sollen die Ventile aber auch kostengünstig sein.

Die bekannten Ventile erfüllen diese Anforderungen nicht hinreichend. Entweder sind sie zu teuer In der Herstellung, oder aber nicht hinreichend korrosionsfrei respektive migrationsfrei.

### Darstellung der Erfindung

Aufgabe der Erfindung ist es, eine dem eingangs genannten technischen Gebiet zugehörender Oberteil für ein fluidführendes Ventil, respektive ein fluidführendes Ventil zu schaffen, welcher kostengünstig herstellbar ist. Eine weitere Aufgabe ist ein entsprechendes Verfahren zur Herstellung eines solchen Oberteils, respektive eines Ventils bereit zu stellen.

Die Lösung der Aufgabe ist durch die Merkmale des Anspruchs 1 definiert. Gemäss der Erfindung sind der Ventilteller und die Führungsstange durch einen Fügvorgang verbunden.

Die Verbindung des Ventiltellers mit der Führungsstange durch einen Fügvorgang ermöglicht eine besonders kostengünstige Herstellung des Oberteils. Weiter kann, je nach Fügvorgang, eine äusserst präzise Verbindung zwischen Führungsstange und Ventilteller geschaffen werden. Demgegenüber wird heute typischerweise der Ventilteller mit der Führungsstange verschraubt, was durch die Bereitstellung von Gewinde an der Führungsstange und dem Ventilteller, sowie durch die Endmontage sowohl zeitlich wie auch technisch wesentlich aufwendiger ist.

Unter dem Begriff Fügen wird nachfolgend das Dauerhafte verbinden von zwei Bauteilen verstanden. Prinzipiell kann der Ventilteller, insbesondere falls dieser kreisrund ausgebildet ist, über einen Fügvorgang um seine Symmetrieachse drehbar an der Führungsstange gehalten sein. Vorzugsweise ist der Ventilteller aber über den Fügvorgang fest mit der Führungsstange verbunden. Der Fügvorgang kann als An- oder Einpressen, Umformung, Schweissen, Löten, Kleben, Nieten, Presspassen und weitere ausgewählt sein.

Ein Oberteil eines fluidführenden Ventils ist vorliegend der Teil eines Ventils, welcher die Führungsstange und den Ventilteller umfasst, der Oberteil ist aber keineswegs auf diese zwei Teile eingeschränkt. Typischerweise umfasst der Oberteil auch weitere Teile, wie zum Beispiel ein Betätigungselement, wie zum Beispiel ein Handrad, eine mit der Führungsstange verbindbare Spindel als Zwischenglied für das Betätigungselement und die Führungsstange, einen Obertellkörper zur Lagerung der Spindel, ein Gewindeübergang zwischen Oberteilkörper und einem Ventilgehäuse, eine Dichtung, zum Beispiel eine Lippendichtung, zwischen Gewindeübergang und Führungsstange etc.

Das Ventil setzt sich schliesslich im Wesentlichen aus einem erfindungsgemässen Oberteil und einem Ventilgehäuse zusammen. Das Ventilgehäuse umfasst dazu eine Aufnahme für ein das Oberteil, typischerweise eine Öffnung mit Innengewinde, sowie einen Ventilsitz und einen Fluideln- und Fluidauslass. Solche Ventile sind dem Fachmann grundsätzlich bekannt. Diese werden als Armaturen für die Wasserversorgung in unterschiedlichen Grössen eingesetzt. In einer bevorzugten Ausführungsform wird der erfindungsgemässe Oberteil in einem Schrägsitzventil verbaut. Alternativ können auch andere Ventile, insbesondere Geradsitzventile mit dem Oberteil versehen werden.

Das Ventil respektive der Oberteil für ein Ventil sind für die Fluidführung geeignet. Entsprechend sind die mit dem Fluid in Kontakt kommenden Bereiche des Ventils vorzugsweise gegenüber dem zu führenden Fluid chemisch beständig.

Besonders bevorzugt sind das Ventil respektive der Oberteil für die Wasserversorgung vorgesehen. Zumindest die wasserberührenden Teile sind in diesem Fall bevorzugt rostfrei ausgebildet (z.B. aus rostfreiem Stahl, Rotguss etc).

Vorzugsweise ist die Führungsstange als Rohr ausgebildet und über eine Stirnseite mit einem zentralen, plattenförmigen Bereich des vorzugsweise kreisscheibenförmigen Ventiltellers verbunden. Die rohrförmige Ausbildung der Führungsstange hat mehrere Vorteile. Zumal kann damit das Gewicht der Führungsstange und damit auch das Gewicht des Oberteils respektive eines Ventils gering gehalten werden. Weiter können die Kosten für die Herstellung der Führungsstange aufgrund des geringen Materialbedarfs gering gehalten werden. Weiter kann bei einem Fligvorgang, welcher ein Erhitzen der Führungsstange erfordert (z.B. Schweissen, Löten und dergleichen), sowohl schnell aufgeheizt und effizient gefügt werden, aber auch die Wärme wieder schnell abgeführt werden. Damit wird wenig Energie für den Fügvorgang benötigt. Zudem kann ein solcher Fügvorgang schnell durchgeführt werden. Schliesslich sind solche Rohre, z. B. INOX-Rohre kostengünstig und auf dem Markt verfügbar. Damit sind die Rohre insbesondere gegenüber Drehteilen auch aus Kostengründen zu bevorzugen.

Der Ventilteller ist üblicherweise rund ausgebildet, so dass der plattenförmige Bereich zentral auf dem runden Ventilteller liegt. Die verbundene Anordnung des Ventiltellers und der Führungsstange ist damit vorzugsweise rotationssymmetrisch. In Varianten kann der Ventilteller aber auch andere Formen aufweisen.

Die rohrförmige Führungsstange weist vorzugsweise einen runden Querschnitt auf, um aufgrund der Rotationssymmetrie eine möglichst einfache Montage zum Beispiel in einer Führung eines Gewindeübergangs zu erreichen. Damit weist die Führungsstange im Wesentlichen die Form eines geraden Kreiszylinders auf. Dies ist insbesondere bei kreisförmigen Ventiltellern von Vorteil, die zentral mit der Führungsstange verbunden sind, da diese damit in beliebiger Drehposition um die Senkrechte auf dem Kreismittelpunkt in dichtender Weise in den Ventilsitz verfahren werden können.

In Varianten kann die Führungsstange auch aus Vollmaterial ausgebildet sein. Der Ventilteller kann auch andere Formen als eine Kreisform aufweisen. Insbesondere kann der Ventilteller auch eine Kreisringform aufweisen, womit die Führungsstange in den Kreisring eingesteckt und über einen Fügvorgang verbunden wird - damit würde allerdings die Herstellung teurer.

Vorzugsweise ist der Ventilteller mit der Führungsstange verschweisst, insbesondere laserverschweisst, besonders bevorzugt unter Schutzgas laserverschweisst. Ein Schweissvorgang ist besonders kostengünstig, insbesondere in einem einzigen Arbeitsschritt durchführbar, während bei einer Verschraubung vorerst Gewinde geschnitten und anschliessend der Ventilteller an die Führungsstange verschraubt werden müsste. Weiter kann, insbesondere mit dem Laserschweissen, eine besonders präzise Verbindung geschaffen werden.

Prinzipiell kann der Schweissvorgang auf verschiedenste Weisen durchgeführt werden, insbesondere hängt die Wahl des Schweissvorgangs auch von der Materialwahl ab. Der Schweissvorgang kann unter Wärme oder Druck, sowohl als auch ohne Schweisszusatzwerkstoffe durchgeführt werden. Dem Fachmann sind viele Schweissverfahren bekannt, welche Je nach Werkstoffwahl im vorliegenden Fall geeignet sein können, wie zum Beispiel Feuerschweissen, Lichtbogenschweissen, Schutzgasschweissen, Reibschweissen, Kaltpressschweissen und viele mehr.

Besonders bevorzugt ist der Ventilteller aber mit der Führungsstange laserverschweisst. Diese Technik hat mehrere Vorteile. Zumal wird beim Laserschweissen eine hohe Schweissgeschwindigkeit erreicht, so dass eine effiziente Produktion der Oberteile ermöglicht wird. Auf Schweisszusatzstoffe kann beim Laserschweissen verzichtet werden, womit dieser Fügvorgang besonders kostengünstig wird. Damit kann weiter eine schmale und schlanke Schweissnaht erreicht werden, womit sich Nachbearbeitungen erübrigen können. Weiter kann mit geringem thermischem Verzug gefügt werden, so dass zum Beispiel ein Ventilteller bereits vor dem Schweissvorgang mit einer umlaufenden Kunststoffdichtung versehen sein kann, ohne dass diese durch den Schweissvorgang beschädigt wird. Auch ein Verzug des Werkstückes selbst kann weitgehend verhindert werden. Aufgrund der hohen erreichbaren Energiedichte wird auch ein besonders ökonomisches und ökologisches Fügen erreicht. Typischerweise wird zwischen dem Ventilteller und der Führungsstange ein T-Stoss für eine Kehlnaht geschaffen, da die Führungsstange meist stirnseitig an einen kreisscheibenförmigen Ventilteller geschweisst wird. In diesem Fall ist der Laserschweissvorgang aus sterischen Gründen von besonderem Vorteil.

Bei einer besonders bevorzugten Ausführungsform erfolgt der Schweissvorgang unter Schutzgasatmosphäre. Damit kann verhindert werden, dass das Metall mit dem Luftsauerstoff reagiert, respektive korrodiert. Das Prinzip des Schutzgasschweissens ist dem Fachmann hinreichend bekannt.

Bevorzugt wird durch den Laserschweissvorgang eine Schweissnaht erreicht, welche in der Projektion auf den Ventilteller einen Kreisring von ungefähr 0.3 mm Dicke bildet, wobei der innere Durchmesser ungefähr dem Durchmesser der Führungsstange entspricht.

Natürlich kann auch ein anderer Fügvorgang wie zum Beispiel durch Kleben oder dergleichen vorgesehen sein. Der konkrete Fügvorgang wird vorzugsweise anhand des Materials des Ventiltellers und der Führungsstange gewählt, Auch kann ein anderes Schweissverfahren als das Laserschweissen eingesetzt werden, wie zum Beispiel Rotationsreibschweissen.

Vorzugsweise ist der Ventiltellerrohling durch einen Stanzvorgang hergestellt. Diese Herstellmethode ist bedeutend kostengünstiger als das bisher übliche Drehen von Ventiltellers und daher zu bevorzugen. Bevorzugt ist der Ventilteller umgeformt. Damit wird eine besonders kostengünstige Herstellung des Ventiltellers erreicht. Der Umformvorgang kann derart gestaltet sein, dass sich eine Nachbearbeitung, insbesondere eine aufwändige mechanische Nachbearbeitung des Ventiltellers erübrigt. Dazu kann der Ventilteller kalt oder warm umgeformt sein. Diese Techniken sind dem Fachmann geläufig.

Typischerweise wird der Ventilteller, insbesondere der Kraftnebenschluss-Ventilteller, für den Fügvorgang eingespannt, um eine präzise Verbindung zu schaffen. Dazu wird der Ventilteller vorzugsweise mit einem Futter, zum Beispiel mit einem Dreibackenfutter gehalten. Falls der Ventilteller eine entlang des Ventiltellerrands umlaufende Dichtung aufweist, kann der Ventilteller zur Zentrierung mit einer Aussparung oder Dorn versehen sein. Damit kann die Führungsstange exakt für den Fügvorgang positioniert werden. In Varianten kann der Ventilteller auch gedreht, geschnitten (zum Beispiel mit einem Laser), gegossen oder anderweitig hergestellt werden.

Vorzugsweise sind die Führungsstange und der Ventilteller aus Edelstahl gebildet. Vorzugsweise handelt es sich um rostfreien Edelstahl. Damit wird ein besonders robustes und langlebiges Oberteil für ein Ventil geschaffen. Zudem wird damit ein Fügvorgang in Form eines Schweissvorgangs begünstigt, Besonders bevorzugt handelt es sich bei den gewählten Stahlsorten um rostfreien Stahl mit der Werkstoffnummer 1.4401 oder 1,4404. Dem Fachmann ist klar, dass prinzipielle die Führungsstange und der Ventilteller aus unterschiedlichen Stahlsorten gebildet sein können. In einer bevorzugten Ausführungsform sind aber der Ventilteller und die Führungsstange aus demselben Material gebildet.

Alternativ können auch andere Eisenlegierungen oder Modifikationen wie Ferrit eingesetzt werden. Auch Aluminium oder Aluminiumlegierungen, wie auch weitere Metall-Legierungen können vorgesehen sein. Schliesslich können der Ventilteller und die Führungsstange auch aus einem Kunststoff oder Verbundwerkstoff (Kevlar, Glasfaserverstärkte Kunststoffe etc.) ausgebildet sein.

Besonders bevorzugt sind sämtliche medienberührenden Teile des Oberteils aus INOX 1.4301, 1.4401, 1.4404 oder Ferrit gebildet. Die weiteren Telle des Oberteils, welche nicht medienberührend sind, sind vorzugsweise aus einem kostengünstigen Material, insbesondere aus Zinkdruckguss allfällig beschichtetem Zinkdruckguss, oder Messing gebildet. Die nicht medienberührenden Teile des Oberteils befinden sich bezüglich des Ventiltellers ausserhalb des O-Rings, welcher zwischen Ventilgehäuse und Oberteilkörper dichtet.

Vorzugsweise umfasst der Ventilteller im Randbereich einen in eine axiale Richtung ragenden, umlaufend Steg, wobei ein Dichtungselement am Ventilteller in eine radiale Richtung am Steg ansteht, womit eine Dichtung auf einem Ventilsitz im Kraftnebenschluss erreichbar ist.

Der Ventilteller kann damit in besonders einfacher Weise, zum Beispiel aus einem Stanzrohling gebildet sein. Dieser kann in einem ersten Schritt als Kreisscheibe vorliegen, um dann in einem zweiten Schritt im Randbereich tiefgezogen zu werden, so dass sich der Steg im Randbereich der Kreisscheibe bildet. Bei einem Schliessvorgang wird das Dichtungselement auf einen Ventilsitz gepresst, womit das Dichtungselement radial nach aussen verformt wird. Durch den Steg wird nun erreicht, dass das Dichtungselement einen Anschlag aufweist, womit in der Schliessstellung das Dichtungselement in radialer Richtung an den Anschlag gepresst wird. Damit wird eine Dichtung im Kraftnebenschluss erreicht.

Der Kraftnebenschluss hat den Vorteil, dass das Dichtungselement mechanisch weniger belastet wird. Damit besteht insbesondere eine grössere Freiheit in der Wahl der Materialien für das Dichtungselement. Dies ist insbesondere von Vorteil, da bislang häufig zwischen der Stabilität gegenüber Scherkräften und der Temperaturstabilität Kompromisse eingegangen werden mussten.

Unter axialer Richtung wird nachfolgend eine Längsrichtung der Führungsstange, respektive eine Bewegungsrichtung des Ventiltellers zwischen offener und geschlossener Stellung verstanden. Unter radialer Richtung wird nachfolgend entsprechend eine Richtung rechtwinklig zur axialen Richtung verstanden.

Alternativ kann der Ventilteller umlaufend mit einer Dichtung eingefasst sein, welche vorzugsweise eine radiale Nut zur Aufnahme eines Randbereichs des Ventiltellers aufweist. Über diese Dichtung wird der Ventilteller in den Ventilsitz gepresst, um zwischen dem Einund Auslass des Ventils fluiddicht zu schliessen. Besonders bevorzugt handelt es sich bei der Dichtung um eine Ringdichtung mit einer Nut zur Aufnahme des Ventiltelferrandes. Damit wird eine einfache und effektive Befestigung der Dichtung am Ventilteller erreicht. In weiteren Varianten kann auch ein im Querschnitt L-förmiger Dichtring vorgesehen sein, welcher zum Beispiel mit dem Ventilteller verklebt wird. Die Dichtung kann aber auch am Ventilsitz angeordnet sein, so dass beim Ventilteller auf die Dichtung verzichtet werden kann.

Vorzugsweise ist das Dichtungselement kreisscheibenförmig ausgebildet und weist insbesondere in axialer Richtung eine ringförmige Wulst auf, welche als Dichtungsbereich für einen Ventilsitz dient. Die Kreisscheibenform hat den Vorteil, dass die Dichtung alleine durch die Dichtfläche zwischen Ventilsitz und Dichtungselement gegeben ist (siehe unten). Vorzugsweise dient die Wulst als Kontaktbereich für den Ventilsitz. Damit steht für das Anpressen des Dichtungselements am Ventilsitz mehr Material zur Verfügung, womit insbesondere auch der Kraftnebenschluss begünstigt werden kann.

In Varianten kann das Dichtungselement auch als Dichtungsring ausgebildet sein. Dies hätte aber den Nachteil, dass die Dichtwirkung in Schliessstellung auch zwischen Ventilteller und Dichtungselement gegeben sein müsste. Weiter kann auch auf die Wulst verzichtet werden.

Bevorzugt umfasst das Dichtungselement eine peroxid-vernetzte Gummimischung. Diese hat den Vorteil, dass sie besonders temperaturbeständig ist. In einer besonders bevorzugten Ausführungsform besteht das Dichtungselement aus EPDM (Ethylen-Propylen-Dien-Kautschuk).

Dem Fachmann sind weitere Materialien bekannt, welche für die Herstellung eines Dichtungselements geeignet sind. Zum Beispiel kann das Dichtungselement auch aus Schwefel-vernetztem Gummi eingesetzt werden. Dieser hat gegenüber dem EPDM den Vorteil, dass er robuster gegenüber Scherkräften ist.

Vorzugsweise umfasst der Oberteil weiter eine Spindel, welche bezüglich der Führungsstange gegenüber dem Ventilteller mit der Führungsstange verbunden ist. Bevorzugt bildet die Spindel einen Übergang zur Bewegungsübertragung zwischen dem Betätigungselement (zum Beispiel ein Handrad) und der Führungsstange.

In Varianten kann auf die Spindel auch verzichtet werden. Die Führungsstange kann zum Beispiel über ein Aussengewinde mit einem Innengewinde des Ventilgehäuses zusammenwirken und fest mit einem Betätigungselement verbunden sein.

Bevorzugt ist die Spindel über eine separate Buchse mit der Führungsstange verbunden. Durch die Ausbildung einer separaten Buchse kann der Herstellungsprozess optimiert werden. Die Buchse kann in einfacher Weise der Spindel und der Führungsstange angepasst werden. Die Führungsstange kann damit auch kostengünstiger hergestellt werden, da im Wesentlichen auf Kopplungsmittel für die Spindel verzichtet werden kann. Die Buchse ist vorzugsweise als Drehteil ausgebildet.

Alternativ kann auf die Buchse auch verzichtet werden. In diesem Fall würde die Spindel direkt mit der Führungsstange verbunden. Diese Variante ist insbesondere bei kleinen Ventilen zu bevorzugen. Die Führungsstange kann zum Beispiel einteilig, warmgepresst sein, da dies kostengünstiger ist als Drehen. Falls die Führungsstangen aber kurz sind (zum Beispiel 20 bis 40 mm), so kann diese ganz durchbohrt werden und anschliessend ein Gewinde geschnitten werden.

Vorzugsweise ist die Buchse als Messingbuchse ausgebildet. Damit wird die Herstellung vereinfacht, da Messing relativ einfach zu bearbeiten ist. Zudem wir damit ein rostfreier Übergang zwischen Spindel und Führungsstange erreicht. Messing hat den weiteren Vorteil, dass es insbesondere bei geeigneter Legierung als Lager geeignet ist, so dass beispielsweise Bewegungen zwischen Spindel und Buchse oder zwisohen Buchse und Oberteilkörper mit geringen Reibkräften erreicht werden können.

In Varianten kann statt Messing auch Rotguss, Stahl, insbesondere INOX 1.4401, 1,4404 oder dergleichen für die Buchse verwendet werden.

Bevorzugt ist die Buchse mit der Führungsstange verschweisst, insbesondere laserverschweisst. Damit kann in einfacher Weise eine präzise Verbindung zwischen Buchse und Führungsstange geschaffen werden. Zudem ist das Laserschweissen besonders effizient. Je nach Material der Buchse kann diese auch angelötet werden.

In Varianten kann die Buchse mit der Führungsstange form- und/oder kraftschlüssig verbunden, verklebt oder anderweitig befestigt sein. Weiter kann die Buchse an der Führungsstange angeformt sein, so dass Führungsstange und Buchse einstückig ausgebildet sind.

Bevorzugt ist die Spindel mit der Buchse über eine Schraubverbindung, vorzugsweise über eine Schraubverbindung mit Trapezgewinde verbunden. In einer bevorzugten Ausführungsform ist die Führungsstange rotationsfrei geführt. Dies kann zum Beispiel durch einen entsprechenden Formschluss zwischen Buchse und Oberteilkörper erreicht werden. Die Buchse kann aussenseitig nicht rund, zum Beispiel polygonal ausgebildet sein, wobei der Oberteilkörper inwändig eine Form aufweist, welche eine Drehung um die Führungsstangenachse verhindert. Insbesondere kann der Oberteilkörper einen Führungskanal für die Führungsstange und die Buchse aufweisen, welcher einen, dem nicht runden Buchsenquerschnitt entsprechenden, inwändigen Querschnitt aufweist. Die Buchse kann zum Beispiel sechseckig sein und der Oberteilkörper kann entsprechend einen Führungskanal mit sechseckigem Querschnitt aufweisen.

Die Spindel kann nun rotierbar, aber in Längsrichtung des Führungskanals des Oberteilkörpers fixiert im Oberteilkörper gehalten sein. Bei einer Drehung der Spindel in eine Richtung schraubt sich diese in die Buchse, womit der Ventilteller verfahren wird. Diese Konstruktion hat den Vorteil, dass das Betätigungselement während der Betätigung ortsfest bleibt.

Die Spindel muss nicht zwingend in Längsrichtung fixiert im Oberteilkörper gehalten sein. Stattdessen kann diese auch über eine Gewindeverbindung im Oberteilkörper geführt sein. Diese Gewindeverbindung muss nicht zwingend dieselbe Steigung wie die Spindel zur Buchse aufweisen. In einer bevorzugten Ausführungsform weist das Gewinde zwischen Oberteilkörper und Spindel eine geringere Steigung auf, als das Gewinde der Buchse. Mit dem Oberteilkörper-Gewinde kann beispielsweise eine visuelle Stellanzeige geschaffen werden.

In Varianten kann auch auf eine Schraubverbindung zwischen Spindel und Buchse verzichte werden. Stattdessen kann die Spindel fest mit der Buchse verbunden sein, wobei eine Gewindeverbindung zum Beispiel zwischen Obertellkörper und Spindel bereit gestellt wird. In letzterer Variante kann natürlich auch die Führungsstange direkt mit einem Aussengewinde versehen sein, welches mit einem Innengewinde des Oberteilkörpers oder des Ventilgehäuses zusammenwirkt. Wie obig bereits erwähnt, kann auch lediglich auf die Buchse verzichtet werden. In diesem Fall kann die Führungsstange selbst mit einem Gewinde versehen sein, welches mit einem entsprechenden Gewinde der Spindel zusammenwirkt. In letzterem Fall würde die Führungsstange mit einer Verdrehsicherung gegenüber dem Oberteilkörper oder dem Ventilgehäuse versehen.

Vorzugsweise umfasst der Oberteil einen Gewindeübergang, in welchem die Führungsstange axial geführt ist, und wobei zwischen der Führungsstange und dem Gewindeübergang eine Dichtung, insbesondere eine Lippendichtung angeordnet ist.

Der Gewindeübergang ist als Übergang zum Ventilgehäuse vorgesehen und umfasst typischerweise ein Aussengewinde für die Montage am Ventilgehäuse. Zudem weist der Gewindeübergang vorzugsweise ein Innengewinde auf, in welchem ein Oberteilkörper zur Aufnahme einer Gewindestange eingeschraubt wird, welche wiederum über eine Buchse mit der Führungsstange verbunden ist. Um die Führungsstange gegenüber dem Gewindeübergang abzudichten, ist vorzugsweise eine die Führungsstange umgebende Lippendichtung vorgesehen, welche ortsfest am Gewindeübergang angeordnet ist. Mit dem Gewindeübergang wird eine besonders einfache Montage des Oberteils erreicht. Zudem kann der Aufbau des präzise gefertigten Oberteils vom typischerweise gegossenen Ventilgehäuse entkoppelt werden.

In Varianten kann auf den Gewindeübergang auch verzichtet werden. Statt der Lippendichtung können auch andere geeignete Dichtungen eingesetzt werden.

Vorzugsweise ist die Lippendichtung ringförmig ausgebildet und weist insbesondere eine V-förmige Querschnittsfläche auf, wobei eine Öffnung der V-förmigen Querschnittsfläche axial orientiert ist.

In Varianten kann die Lippendichtung auch andere dem Fachmann bekannte Formen aufweisen.

Vorzugsweise umfasst der Gewindeübergang eine axiale Öffnung, in welcher die Führungsstange geführt ist, wobei die axiale Öffnung einen umlaufenden, radial nach innen ragenden Vorsprung aufweist, welcher insbesondere in einem distalen Bereich der Öffnung angeordnet ist und wobei die Lippendichtung an einem Aussenmantel eine umlaufende Nut zur Aufnahme des Vorsprungs aufweist. Damit kann die Lippendichtung in axialer Richtung in einfacher Weise ortsfest gehalten werden. Der Aussenmantel der Lippendichtung ist vorzugsweise derart bemessen, dass sie in montiertem Zustand axial über das distale Ende des Gewindeübergangs übersteht. Besonders bevorzugt weist der Gewindeübergang dort einen Absatz auf, in welchen der Aussenmantel eingreift. Dieser Absatz dient vorzugsweise als Wegbegrenzung für die Lippendichtung im offenen Zustand des Ventils. Wird die Lippendichtung durch Öffnen des Ventils zwischen der Ventiltellerrückseite und dem Gewindeübergang im Vorsprung verpresst, so ergibt sich dort eine Abdichtung nach dem Kraftnebenschlussprinzip. Insbesondere kann damit die Dichtung zwischen Führungsstange und Gewindeübergang entlastet werden, womit ein robusterer Oberteil für ein Ventil geschaffen wird.

In Varianten kann auf die umlaufende Nut der Lippendichtung und damit auf die Dichtung des Ventiltellers zum Gewindeübergang auch verzichtet werden. In diesem Fall kann der Vorsprung auch nur als axialer Anschlag in distaler Richtung für die Lippendichtung vorgesehen sein.

In einem Verfahren zur Herstellung eines Oberteils für ein Ventil, insbesondere für ein flüssigkeitführendes Ventil, mit einer Führungsstange und einem Ventilteller, werden der Ventilteller und die Führungsstange durch einen Fügvorgang, insbesondere durch einen Schweissvorgang verbunden. Der Ventilteller ist vorzugsweise aus einem Rohteil durch einen Umformvorgang hergestellt, wobei besonders bevorzugt nach dem Umformen der Ventilteller keiner Nachbearbeitung unterzogen wird. Damit wird ein einfaches, effizientes und damit kostengünstiges Herstellungsverfahren geschaffen.

Vorzugsweise wird der Ventilteller vor dem Schweissvorgang mit einem Dichtungselement versehen. Für die Bearbeitung des Ventiltellers während dem Aufbringen der Dichtung ist es logistisch wie auch sterisch günstiger, wenn der Ventilteller noch nicht mit der Führungsstange verschweisst, respektive verbunden ist. Um nun die durch den Schweissvorgang bereits aufgebrachte Dichtung nicht zu beschädigen, erfolgt der Schweissvorgang vorzugsweise durch einen Laser. Damit kann mit einem kleinen Fokus die Führungsstange präzise am Ventilteller befestigt werden, ohne dass eine grosse Wärmemenge im Ventilteller erzeugt wird. Zusätzlich kann die Wärme auch durch die Führungsstange abgeführt werden, insbesondere wenn diese rohrförmig ausgebildet ist und damit eine grosse Oberfläche aufweist.

Alternativ kann die Dichtung auch nach dem Schweissvorgang am Ventilteller befestigt werden,

Vorzugsweise schliesst ein Laserstrahl während des Schweissvorgangs mit dem Ventilteller einen Winkel zwischen 5° und 20°, vorzugsweise zwischen 8° und 15°, insbesondere ungefähr 12° ein. Damit wird der Laserstrahl einerseits knapp über der Dichtung angesetzt, so dass die Dichtung nicht direkt durch den Laserstrahl beschädigt wird. Anderseits wird dadurch ein möglichst flacher Winkel zum Ventilteller geschaffen, um diesen möglichst wenig zu erwärmen. Weiter ist damit der Winkel zur Führungsstange hinreichend gross, um einen Schweissvorgang zu erreichen. Schliesslich werden damit auch eine Verformung des Ventiltellers und damit ein schlechter Sitz im Ventilsitz, das heisst eine ungenügende Dichtung, vermieden.

In Varianten kann der Winkel auch in einem anderen Bereich liegen. Falls der Wärmetransport des Ventiltellers und die Wärmebeständigkeit der Dichtung dies zulassen, so kann der Winkel zwischen Ventilteller und Laserstrahl auch grösser als 20°, zum Beispiel zwischen 20° und 45° oder grösser sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer Schrägansicht einer Ventilteilereinheit;
- Fig. 2: eine schematische Darstellung einer Schrägansicht einer Ventiltellereinheit mit einer alternativen Ausführungsform des Dichtungselements;
- Fig. 3: eine schematische Darstellung eines Schnittes einer Ventiltellereinheit entlang einer Längsachse gemäss Figur 2; und
- Fig. 4: eine schematische Darstellung eines Schnittes durch einen Ventiloberteil umfassend eine Ventiltellereinheit gemäss Figur 2.

Grundsätzlich sind in den Figuren gleiche Teile mit gleichen Bezugszeichen versehen,

### Wege zur Ausführung der Erfindung

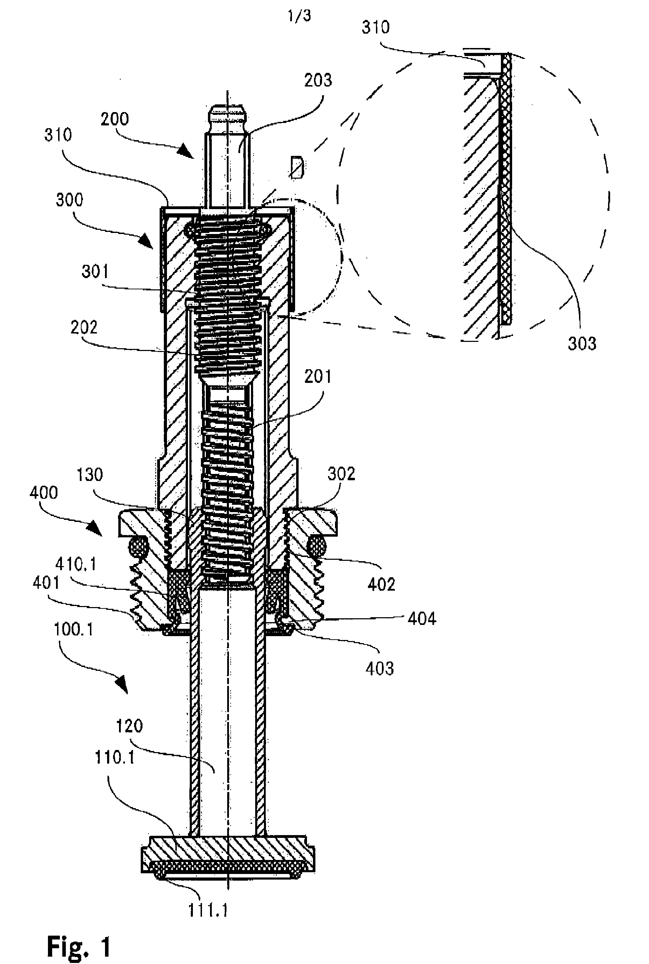

Die Figur 1 zeigt eine schematische Darstellung eines Schnittes durch ein Ventiloberteil umfassend eine Ventiltellereinheit 100.1. Der Ventiloberteil umfasst zusätzlich eine Spindel 200, einen Oberteilkörper 300 und einen Gewindeübergang 400.

In dieser Form wird der Ventiloberteil zur Endmontage in ein Innengewinde eines Ventilgehäuses (nicht dargestellt) eingeschraubt. Das vorliegende Ventiloberteil ist vorzugsweise für den Einsatz als Schrägsitzventil vorgesehen, kann aber auch in einem Geradsitzventil verwendet werden. In letzterem Fall müssten allenfalls gewisse Teile, wie zum Beispiel die Länge des Rohrstücks 120, angepasst werden.

Der Ventiloberteil umfasst einen Gewindeübergang 400 aus Stahl 1.4401, welcher ein Aussengewinde 401, ein Innengewinde 402 und einen zum Innengewinde 402 beabstandeten, umlaufenden Absatz 403 und einen sich dem Absatz 403 in proximaler Richtung anschliessender Vorsprung 404 aufweist. Über das Aussengewinde 401 des Gewindeübergangs 400 wird der Ventiloberteil in einen Stutzen des Ventilgehäuses eingeschraubt und mit einem O-Ring aus EPDM (Ethylen-Proylen-Dien-Kautschuk) abgedichtet. Über das Innengewinde 402 wird ein nachfolgend beschriebener Oberteilkörper 300 montiert. Ein sich an das Innengewinde 402 anschliessender Abschnitt dient zur Aufnahme einer Lippendichtung 410.1 aus EPDM, welche das Rohrstück 120 gegen den Gewindeübergang 400 abdichtet. In montiertem Zustand ist die Lippendichtung 410.1 zwischen dem Absatz 403 und dem Oberteilkörper 300 gehalten. Die Lippendichtung 410.1 weist einen V-förmigen Querschnitt auf, wobei die Öffnungsrichtung distal orientiert ist. Die radial äussere Flanke der Lippendichtung 410.1 ist länger ausgebildet als die innere Flanke. Die äussere Flanke weist an seinem Aussenmantel eine umlaufende Nut auf, in welcher der Vorsprung 404 des Gewindeübergangs 400 aufgenommen ist. Das Ende der äusseren Flanke der Lippendichtung 410.1 ragt radial nach aussen, in den Absatz 403 hinein. Wird der Ventilteller 110,1 beim Öffnen des Ventils an den Gewindeübergang 400 gepresst, so kontaktiert der Ventilteller 110.1 die Lippendichtung 410.1 und presst das Ende der äusseren Flanke in den Vorsprung 404, womit sich eine Kraftnebenschluss-Abdichtung ergibt.

Der Oberteilkörper 300 weist im Wesentlichen die Form eines Zylinders auf. Stirnseitig umfasst der Oberteilkörper 300 ein Aussengewinde 302, welches in das Innengewinde 402 des Gewindeübergangs 400 eingeschraubt wird. Von der Stirnseite an weist der Oberteilkörper 300 über eine ungefähr dem Rohrstück 120 entsprechende Länge einen sechseckigen Querschnitt auf, womit eine Verdrehsicherung für die Buchse 130 erreicht wird. Damit ist die Ventiltellereinheit 100 innerhalb dieses Bereichs mit sechseckigem Querschnitt axial verfahrbar. An den Bereich mit sechseckigem Querschnitt grenzt ein Innengewinde 301 zur Aufnahme der Spindel 200.

Die Spindel 200 besteht aus Messing (Werkstoff CW617N), ist stangenförmig ausgebildet und weist nacheinander im Wesentlichen drei Abschnitte auf, nämlich ein erstes Buchsengewinde 201, anschliessend ein Oberteilkörpergewinde 202 und schliesslich ein Handradzapfen 203. Das Buchsengewinde 201 wird in die Buchse 130 der Ventiltellereinheit 100 eingeschraubt. Über diese Schraubverbindung wird der Ventilteller 110.1 vom und zum Ventilsitz bewegt. Das Oberteilkörpergewinde 202 wird in das Innengewinde 301 des Oberteilkörpers 300 geschraubt und dient zur Stellungsanzeige. Dazu ist die Spindel mit einer hülsenförmigen Stellanzeige 310 des Oberteilkörpers verbunden. Das Buchsengewinde 201 weist dazu eine grössere Steigung auf als das Oberteilkörpergewinde 202. Beim Ausschrauben der Spindel 200 wird die Ventiltellereinheit 100 als Ganzes zurückgefahren, das heisst der Ventilteller 110.1 wird vom Ventilsitz abgehoben. Gleichzeitig wird die Spindel 200 selbst durch das Oberteilkörpergewinde 202 im Obertellkörper 200 ausgefahren. Beim ersten Einschrauben wird die Stellanzeige 310 In Position gebracht und zeigt anschliessend den Öffnungszustand des Ventils. Dadurch, dass aber das Oberteilkörpergewinde 202 eine geringere Steigung als das Buchsengewinde 201 aufweist, wird der Verfahrweg nicht vollständig kompensiert, so dass die Funktion des Ventils gewährleistet bleibt. Der Oberteilkörper weist im proximal obersten Bereich über eine kurze Strecke einen Durchmesser auf, welcher sich ab dem Absatz 303 geringfügig verjüngt. Diese Ausbildung des Oberteilkörpers 300 hat den Vorteil, dass die Stellanzeige 310 über den Verfahrweg mit einer im Wesentlichen konstanten Reibkraft beaufschlagt ist, so dass unabhängig von der Schliessstellung ein im Wesentlichen konstanter Kraftaufwand zum Betätigen der Spindel 200 aufzuwenden ist. Schliesslich dient der Handradzapfen 203 zur Aufnahme eines Handrads, womit das Ventil betätigt werden kann.

Der Ventilteller 110.1 ist aus einem gestanzten Stahlblech gefertigt. Das Rohteil ist als Kreisscheibe ausgebildet. Anschliessend wird, um den umlaufenden Absatz am Scheibenrand zu erreichen, dieser gezogen (Tiefziehen) oder gepresst. Stirnseitig bildet sich damit eine Wannenform, in welcher eine kreisscheibenförmige Dichtung 111.1 aus EPDM aufgenommen werden kann. Die Dichtung 111.1 weist eine kreisförmige Wulst auf, welche als Kontaktbereich für einen Ventilsitz dient. Wird nun der Ventilteller 110.1 mit der Dichtung 111.1 auf einen Ventilsitz gepresst, so wird der Druck von der Dichtung 111.1 zum Teil radial nach aussen, zur Wannenwand des Ventiltellers 110.1 umgeleitet, womit eine Abdichtung im Kraftnebenschluss erreicht wird.

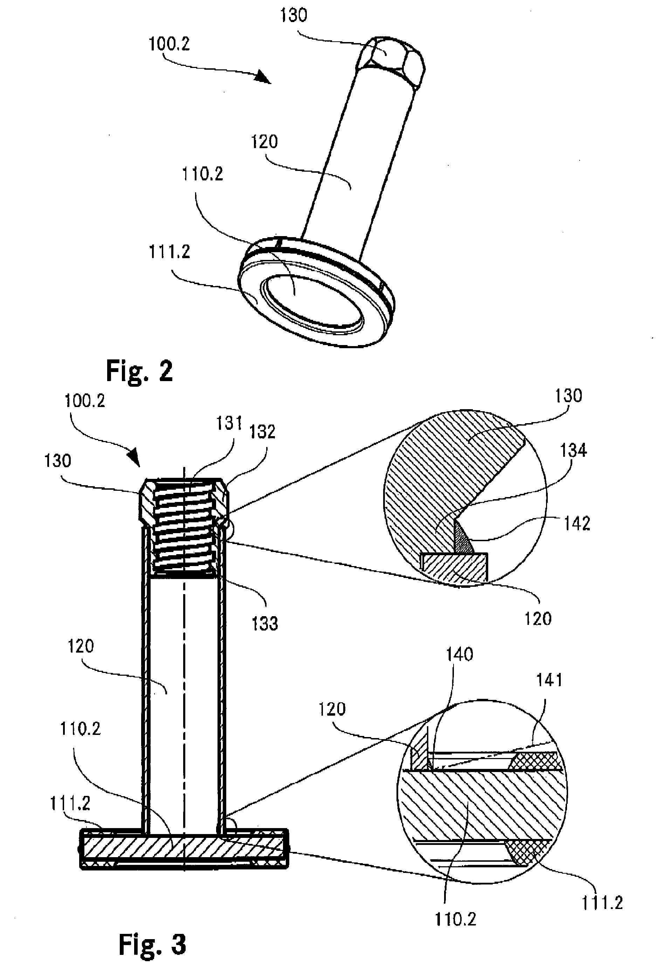

Die Ausführungsform gemäss den nachfolgenden Figuren 2 bis 4 zeigen eine Ventiltellereinheit 100.2 mit einer anderen Dichtung 111.2 und Ventilteller 110.2, respektive einem Oberteilkörper mit einer anderen Lippendichtung 410.2. Im Übrigen stimmen die weiteren Merkmale mit der obig beschriebenen Ausführungsform überein.

Die Figur 2 zeigt eine schematische Darstellung einer Schrägansicht einer Ventiltellereinheit 100.2, umfassend einen Ventilteller 110.2 und ein Rohrstück 120 (oder eine Führungsstange), sowie eine Buchse 130. Das Rohrstück 120 ist über eine Stirnseite mit dem Ventilteller 110.2 verschweisst und gegenüber dem Ventilteller 110.2 mit der Buchse 130 verschweisst. Weiter ist die stirnseitige Dichtung 111.2 des Ventiltellers 110.2 ersichtlich. Der Ventilteller 110.2 ist vorliegend als Kreisscheibe, insbesondere als Stanzteil aus Stahl ausgebildet.

Die Figur 3 zeigt eine schematische Darstellung eines Schnittes einer Ventiltellereinheit entlang einer Längsachse gemäss Figur 2.

Der Ventilteller 110.2 ist vorliegend als Kreisscheibe mit einem Durchmesser von 37.5 mm und einer Dicke von 3 mm ausgebildet und besteht aus Stahl 1.4401. Der Ventilteller 110.2 wird durch einen Stanzvorgang hergestellt und durch einen Umformvorgang weiter verarbeitet. Allenfalls wird der Ventilteller 110.2 noch trowalisiert, das heisst, einem Gleitschleifvorgang unterzogen.

Der Ventilteller 110.2 ist mit einer umlaufenden, ringförmigen Dichtung 111.2 versehen. Diese weist eine radiale Nut zur Aufnahme des Randbereichs des Ventiltellers 110.2 auf. Die Dichtung111.2 weist eine Dicke von 5.5 bis 6.5 mm und einen Aussendurchmesser von 38.5 mm auf. Die Dichtungsunterseite ist dabei dicker ausgebildet als die Dichtungsoberseite, das heisst, die mit dem Ventilsitz zusammenwirkende Dichtfläche ist mit einer Dicke von zum Beispiel 1.5 mm stärker ausgebildet, als die gegenüberliegende Dichtungsseite, welche zum Beispiel eine Dicke von 1 mm aufweisen kann.

Das Rohrstück 120 ist als Kreiszylindermantel ausgebildet und besteht aus Stahl 1.4401. Das Rohrstück 120 weist vorliegend eine Wandstärke von 1.2 mm, eine Länge von 44 bis 54 mm und einen Aussendurchmesser von 15 mm auf. Je nach Baugrösse kann das Rohrstück 120 auch bis zu 100 mm lang sein. Das Rohrstück 120 wird vorzugsweise durch Sägen abgelängt und ebenfalls trowalisiert.

Die Buchse 134 ist aus Stahl 1.4301 gebildet und weist ein durchgehendes Innengewinde 131 auf. Das Innengewinde 131 ist als Linksgewinde ausgebildet und weist eine Steigung von 3 mm pro Umdrehung auf. Aussenseitig umfasst die Buchse 130 einen ersten zylinderförmigen Abschnitt, weicher als Steckhülse 133 für die Fixierung im Rohrstück 120 dient. Entsprechend stimmt der Aussendurchmesser der Steckhülse 133 mit dem Innendurchmesser des Rohrstücks 120 überein, das heisst im vorliegenden Fall beträgt der Aussendurchmesser der Steckhülse 133 12.6 mm. Die axiale Länge der Steckhülse 133 beträgt 9.3 mm. An die Steckhülse 133 schliesst sich axial ein radial nach aussen ragender Absatz 134 an, so dass der Aussendurchmesser für eine axiale Länge von 0.7 mm um 1.4 mm zunimmt. Der Absatz 134 ist also radial 0.7 mm hoch und axial 0.7 mm tief. Dieser Absatz 134 dient für das Rohrstück 120 als Anschlag. Dadurch, dass die radiale Breite des Absatzes 134 kleiner ist, als die Materialstärke des Rohrstückes 120, wird eine Nut für die Schweissnaht gebildet. An den Absatz 134 schliesst sich ein Aussensechskant 132 an, welcher in axialer Richtung jeweils eine Abschrägung aufweist. Der Aussensechskant 132 dient zur Verdrehsicherung der Ventiltellereinheit 100.2 im Oberteilkörper 300 (siehe Figur 3).

Für die Montage wird vorerst der Ventilteller 110.2 mit der Dichtung 111.2 versehen. Anschliessend wird das Rohrstück 120, allenfalls über eine Positionierhilfe, positioniert. Der Schweissvorgang erfolgt über einen Laser, welcher entlang der Schweissrichtung 140 ausgerichtet ist und zum Ventilteller 110.2 vorliegend einen Winkel von 11.8° aufweist. Damit wird gewährleistet, dass die Dichtung 111.2 durch den Laser nicht beschädigt wird. Der Durchmesser des Lasers ist dabei 0.21 mm. Die gebildete Schweissnaht 140 weist eine radiale Breite von ungefähr 0.3 mm und eine axiale Länge von ungefähr 0.5 mm auf.

Die Breite der Schwelssnaht soll kleiner sein, als die zwischen der Buchse 130 und dem Rohrstück 120 im Übergang gebildete Nuttiefe, so dass die Schweissnaht nicht radial über das Rohrstück hinausragt.

Anschliessend wird die Buchse 130 mit der Steckhülse 133 voran in das Rohrstück 120 gesteckt. Ebenfalls mittels eines Laserschweissvorgangs wird nun die Buchse entlang des Absatzes 134 verschweisst. Die Schweissnaht weist auch hier eine radiale Breite von ungefähr 0.3 mm und eine axiale Länge von ungefähr 0.5 mm auf, womit die Schweissnaht insbesondere nicht radial über das Rohrstück 120 übersteht.

Dem Fachmann ist klar, dass die Buchse 130 auch vor dem Verschweissen des Ventiltellers 110.2 mit dem Rohrstück 120 angebracht werden kann. Ebenso ist es auch möglich, die Dichtung 111.2 nach dem Verschweissen des Ventiltellers 110.2 mit dem Rohrstück 120 am Ventilteller 110.2 zu befestigen.

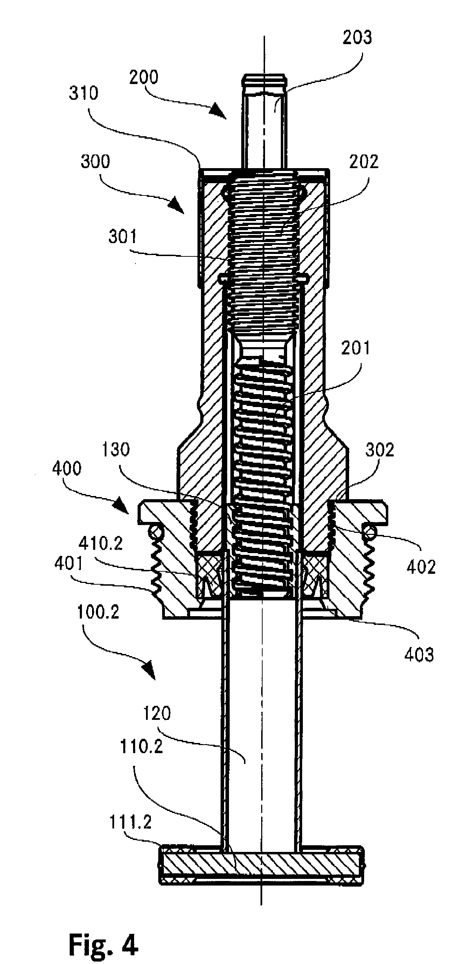

Die Figur 4 zeigt eine schematische Darstellung eines Schnittes durch ein Ventiloberteil umfassend eine Ventiltellereinheit 100.2 gemäss Figur 3. Der Ventiloberteil umfasst zusätzlich eine Spindel 200, einen Oberteilkörper 300 und einen Gewindeübergang 400.

Der Ventiloberteil umfasst einen Gewindeübergang 400 aus Stahl 1.4401, welcher ein Aussengewinde 401, ein Innengewinde 402 und einen zum Innengewinde 402 beabstandeten, umlaufenden Absatz 403 aufweist. Über das Aussengewinde 401 des Gewindeübergangs 400 wird der Ventiloberteil in einen Stutzen des Ventilgehäuses eingeschraubt und mit einem O-Ring aus EPDM (Ethylen-Proylen-Dien-Kautschuk) abgedichtet. Über das Innengewinde 402 wird ein nachfolgend beschriebener Oberteilkörper 300 montiert. Ein sich an das Innengewinde 402 anschliessender Abschnitt dient zur Aufnahme einer Lippendichtung 410.2 aus EPDM, welche das Rohrstück 120 gegen den Gewindeübergang 400 abdichtet. In montiertem Zustand ist die Lippendichtung 410.2 zwischen dem Absatz 403 und dem Oberteilkörper 300 gehalten,

Der Oberteilkörper 300 weist im Wesentlichen die Form eines Zylinders auf. Stirnseitig umfasst der Oberteilkörper 300 ein Aussengewinde 302, welches in das Innengewinde 402 des Gewindeübergangs 400 eingeschraubt wird. Von der Stirnseite an weist der Oberteilkörper 300 über eine ungefähr dem Rohrstück 120 entsprechenden Länge einen sechseckigen Querschnitt auf, womit eine Verdrehsicherung für die Buchse 130 erreicht wird. Damit ist die Ventiltellereinheit 100.2 innerhalb dieses Bereichs mit sechseckigem Querschnitt axial verfahrbar. An den Bereich mit sechseckigem Querschnitt grenzt ein Innengewinde 301 zur Aufnahme der Spindel 200.

Die Spindel 200 besteht aus Messing (Werkstoff CW617N), ist stangenförmig ausgebildet und weist nacheinander im Wesentlichen drei Abschnitte auf, nämlich ein erstes Buchsengewinde 201, anschliessend ein Oberteilkörpergewinde 202 und schliesslich ein Handradzapfen 203. Das Buchsengewinde 201 wird in die Buchse 130 der Ventiltellereinheit 100.2 eingeschraubt. Über diese Schraubverbindung wird der Ventilteller 110.2 vom und zum Ventilsitz bewegt. Das Oberteilkörpergewinde 202 wird in das Innengewinde 301 des Oberteilkörpers 300 geschraubt und dient zur Stellungsanzeige. Dazu ist die Spindel mit einer hülsenförmigen Stellanzeige 310 des Oberteilkörpers verbunden. Das Buchsengewinde 201 weist dazu eine grössere Steigung auf als das Oberteilkörpergewinde 202. Beim Einschrauben der Spindel 200 wird die Ventiltellereinheit 100.2 als Ganzes zurückgefahren, das heisst, der Ventilteller 110.2 wird vom Ventilsitz abgehoben. Gleichzeitig wird die Spindel 200 selbst durch das Oberteilkörpergewinde 202 im Oberteilkörper 200 zurückgefahren, so dass die Stellanzeige 310 entlang des Oberteilkörpers 300 zurückgefahren wird. Je nach axialer Stellung der Stellanzeige 310 kann damit auf den Öffnungszustand des Ventils geschlossen werden. Dadurch, dass aber das Oberteilkörpergewinde 202 eine geringere Steigung als das Buchsengewinde 201 aufweist, wird der Verfahrweg nicht vollständig kompensiert, so dass die Funktion des Ventils gewährleistet bleibt. Schliesslich dient der Handradzapfen 203 zur Aufnahme eines Handrads, womit das Ventil betätigt werden kann. Alternativ zu Stahl 1.4401 kann in der vorliegenden Ausführungsform jeweils auch Stahl 1.4404 eingesetzt sein. Dem Fachmann ist allerdings klar, dass auch weitere Stahlsorten eingesetzt werden können. Die Buchse 130 kann auch aus Messing und die Spindel 200 kann auch aus Stahl ausgebildet sein. Der Schweissvorgang kann prinzipiell auch vor dem Anbringen der Dichtung am Ventilteller durchgeführt werden.

Die Massangaben sind lediglich als Beispiele zu verstehen. Dem Fachmann ist auch hier klar, dass die Masse nahezu beliebig variieren und einer gewünschten Baugrösse mühelos angepasst werden können.

Zusammenfassend ist festzustellen, dass erfindungsgemäss ein Oberteil, respektive ein Ventil geschaffen werden, welche besonders einfach und kostengünstig herstell bar sind.

## Patentansprüche

1. Oberteil für ein fluidführendes Ventil, insbesondere für die Wasserversorgung, umfassend eine Führungsstange (120) und einen Ventilteller (110.1), **dadurch gekennzeichnet, dass** der Ventilteller (110.1) und die Führungsstange (120) durch einen Fügvorgang verbunden sind.

2. Oberteil nach Anspruch 1, **dadurch gekennzeichnet, dass** die Führungsstange (120) als Rohr ausgebildet ist und über eine Stirnseite mit einem zentralen, plattenförmigen Bereich des vorzugsweise kreisscheibenförmigen Ventiltellers (110.1) verbunden ist.

3. Oberteil nach einem der Ansprüche 1 oder 2, **dadurch gekennzeichnet, dass** der Ventilteller (110.1) mit der Führungsstange (120) verschweisst, insbesondere laserverechweisst, besonders bevorzugt unter Schutzgas laserverschweisst ist.

4. Oberteil nach einem der Ansprüche 1 bis 3, **dadurch gekennzeichnet, dass** der Ventilteller (110.1) umgeformt ist.

5. Oberteil nach einem der Ansprüche 1 bis 4, **dadurch gekennzeichnet, dass** die Führungsstange (120) und der Ventilteller (110.1) aus Edelstahl gebildet sind.

6. Oberteil nach einem der Ansprüche 1 bis 5, **dadurch gekennzeichnet, dass** der Ventilteller (110.1) im Randbereich einen in eine axiale Richtung ragenden, umlaufend Steg umfasst, wobei ein Dichtungselement (111.1) am Ventilteller (110.1) in eine radiale Richtung am Steg ansteht, womit eine Dichtung auf einem Ventilsitz im Kraftnebenschluss erreichbar ist.

7. Oberteil nach Anspruch 6, **dadurch gekennzeichnet, dass** das Dichtungselement (111.1) kreisscheibenförmig ausgebildet ist und insbesondere in axialer Richtung eine ringförmige Wulst aufweist, welche als Dichtungsbereich für einen Ventilsitz dient.

8. Oberteil nach Anspruch 6 oder 7, **dadurch gekennzeichnet, dass** das Dichtungselement (111.1) eine peroxid-vernetzte Gummimischung umfasst, insbesondere aus EPDM besteht.

9. Oberteil nach einem der Ansprüche 1 bis 8, **dadurch gekennzeichnet, dass** der Oberteil weiter eine Spindel (200) umfasst, welche bezüglich der Führungsstange (120) gegenüber des Ventiltellers (110.1) mit der Führungsstange (120) verbunden ist.

10. Oberteil nach Anspruch 9, **dadurch gekennzeichnet, dass** die Spindel (200) über eine separate Buchse (130) mit der Führungsstange (120) verbunden ist.

11. Oberteil nach Anspruch 10, **dadurch gekennzeichnet, dass** die Buchse (130) als Messingbuchse ausgebildet ist.

12. Oberteil nach Anspruch 10 oder 11, **dadurch gekennzeichnet, dass** die Buchse (130) mit der Führungsstange (120) verschweisst, insbesondere Laserverschweisst, ist.

13. Oberteil nach einem der Ansprüche 10 bis 12, **dadurch gekennzeichnet, dass** die Spindel (200) mit der Buchse (130) über eine Schraubverbindung, vorzugsweise über eine Schraubverbindung mit Trapezgewinde verbunden ist.

14. Oberteil nach einem der Ansprüche 1 bis 13, **dadurch gekennzeichnet, dass** er einen Gewindeübergang (400) umfasst, in welchem die Führungsstange (120) axial geführt ist, und wobei zwischen der Führungsstange (120) und dem Gewindeübergang eine Dichtung (410.1), insbesondere eine Lippendichtung angeordnet ist.

15. Oberteil nach Anspruch 14, **dadurch gekennzeichnet, dass** die Lippendichtung (410.1) ringförmig ausgebildet ist und insbesondere eine V-förmige Querschnittsfläche aufweist, wobei eine Öffnung der V-förmigen Querschnittsfläche axial orientiert ist.

16. Oberteil nach Anspruch 14 oder 15, **dadurch gekennzeichnet, dass** der Gewindeübergang (400) eine axiale Öffnung umfasst, in welcher die Führungsstange (120) geführt ist, wobei die axiale Öffnung einen umlaufenden, radial nach Innen ragenden Vorsprung (404) aufweist, welcher insbesondere in einem distalen Bereich der Öffnung angeordnet ist und wobei die Lippendichtung (410.1) an einem Aussenmantel eine umlaufende Nut zur Aufnahme des Vorsprungs (404) aufweist.

17. Ventil, Insbesondere ein Schrägsitzventil, umfassend ein Oberteil nach einem der Ansprüche 1 bis 16.

18. Verfahren zur Herstellung eines Oberteils für ein Ventil, insbesondere für ein flüssigkeitführendes Ventil, mit einer Führungsstange (120) und einem Ventilteller (110.1), **dadurch gekennzeichnet, dass** der Ventilteller (110.1) und die Führungsstange (120) durch einen Fügvorgang verbunden werden.

19. Verfahren nach Anspruch 18, **dadurch gekennzeichnet, dass** der Ventilteller (110.1) und die Führungsstange (120) durch einen Schweissvorgang verbunden werden.

20. Verfahren nach Anspruch 18 oder 19, **dadurch gekennzeichnet, dass** der Ventilteller (110.1) aus einem Rohteil durch einen Umformvorgang hergestellt wird und insbesondere nach dem Umformvorgang keiner Nachbearbeitung unterzogen wird.

21. Verfahren nach Anspruch 19 oder 20, **dadurch gekennzeichnet, dass** der Ventilteller (110.1) vor dem Schweissvorgang mit einem Dichtungselement (111.1) versehen wird.

22. Verfahren nach einem der Ansprüche 19 bis 21, **dadurch gekennzeichnet, dass** ein Laserstrahl während des Schweissvorgangs mit dem Ventilteller (110.1) einen Winkel zwischen 5° und 20°, vorzugsweise zwischen 8° und 15°, insbesondere ungefähr 12° einschliesst.
